# EUROPEAN PATENT SPECIFICATION

(11) **EP 2 802 220 B1**
(45) Date of publication and mention of the grant of the patent: **21.09.2016**
(21) Application number: 13706305.3
(22) Date of filing: 11.01.2013
(51) Int. Cl.: A23L 7/104, A23L 2/38

(54) **BOZA PRODUCTION METHOD WITH STARTER CULTURE**
BOZA-HERSTELLUNGSVERFAHREN MIT EINER STARTERKULTUR
PROCÉDÉ DE PRODUCTION DE BOZA À PARTIR D'UNE CULTURE INITIALE

(30) Priority: 13.01.2012 TR 201200458
(43) Date of publication of application: 19.11.2014
(73) Proprietor: Tubitak, 06100 Ankara (TR)
(72) Inventor: BORCAKLI, Mehlika, 41470 Kocaeli (TR); OZTURK, Tarik, 41470 Kocaeli (TR); UYGUN, Nabi, 41470 Kocaeli (TR); GOZUM, Ender, 41470 Kocaeli (TR)
(86) International application number: PCT/IB2013/050274
(87) International publication number: WO 2013/105059

(56) References cited:
- US-A1- 2006 270 019
- MURAT ZORBA ET AL: "The use of starter cultures in the fermentation of boza, a traditional Turkish beverage", PROCESS BIOCHEMISTRY, vol. 38, no. 10, 30 May 2003 (2003-05-30), pages 1405-1411, XP55059006, ISSN: 1359-5113, DOI: 10.1016/S0032-9592(03)00033-5
- Jean Guy Leblanc ET AL: "Bacteriocin producing lactic acid bacteria isolated from Boza, a traditional fermented beverage from Balkan Peninsula - from isolation to application" In: "Science against microbial pathogens: communicating current research and technological advances", 2011, XP55058986, pages 1311-1320, the whole document
- PENKA M. PETROVA ET AL: "ANTIMICROBIAL ACTIVITY OF STARCH-DEGRADING LACTOBACILLUS STRAINS ISOLATED FROM BOZA", BIOTECHNOLOGY & BIOTECHNOLOGICAL EQUIPMENT, vol. 25, no. 4, December 2011 (2011-12), pages 114-116, XP55058992, ISSN: 1310-2818, DOI: 10.5504/bbeq.2011.0124
- Merih Kivanç ET AL: "Isolation and identification of lactic acid bacteria from boza, and their microbial activity against several reporter strains", Turk J Biol, 2011, pages 313-324, XP55058989, DOI: 10.3906/biy-0906-67 Retrieved from the Internet: URL:http://journals.tubitak.gov.tr/biology /issues/biy-11-35-3/biy-35-3-6-0906-67.pdf [retrieved on 2013-04-10]

## Description

The scope of this invention is the production process and bacterial composition of Boza produced microbiologically, physically, chemically and sensorially defined Boza, that can show the same characteristics at every production.

The scope of the invention is a fermented Boza that obtained by the inoculation of *Lactobacillus plantarum* GE223 and *Wiessella confusa* GE213 to unfermented Boza that prepared appropriate to its technique.

Physically, chemically, microbiologically and sensorially standard Boza can not be obtained because traditional Boza production practice is realized by contaminated causal microorganisms, previously present in the environment, to unfermented Boza or by addition of remaining fermented Boza from the last production.

Optimum fermentation of Boza relies on contaminations from surrounding microflora, and can only be produced at a certain period of the year. Because of the interruption in production, Boza produced in the next production season can not be presented to the consumer until reaching the desired environmental microflora flora and desired taste and causes product loss. As the production depends on environmental conditions, it can not be controlled as required and unfermented or over fermented sour Boza can be sold at stores.

The innovation of this invention is, to come up with a solution for this technological problems, to develop a process for standard Boza production and using a bacteria composition isolated from natural Turkish Boza. In this invention, bacteria isolated from Turkish Boza were investigated and appropriate bacteria were selected to produce a bacterial combination that allows to the production of standard Boza from microbiological, chemical and sensorial aspects.

Use of bakers yeast (Saccharomyces sp.) instead of lactic acid bacteria is mentioned in the patents, BG101548 'Boza composition and method for its production' and BG326 'Composition for making Boza drink' obtained by Bulgarian inventors.

Zorba et al. (2003) described the studies on Boza production with starter cultures in their publication entitled 'The use of starter cultures in the fermentation of Boza, a traditional beverage' (process Biochemistry, 2003, 38, 1405-1411), but although bacteria isolated from Boza are used for inoculation, because of the utilization of unsterilized Boza for inoculation, Boza contains many other (competitive) bacteria and rule out the standard Boza production at industrial level. Another important point that differentiate this invention from others is the use of *Wiessella confusa* and *Lactobacillus plantarum* which were not used in other patents.

In the patent number BG60703 'Installation for the production of Boza drink and an autoclave for it', the autoclave was not used for the sterilization of unfermented Boza but to cook the Boza beverage. In the patent number BG102205 'Method for preparation of a soft drink from cereal crops' pasteurization or sterilization is used for killing bacteria in Boza which is already fermented and ready to drink for extending the shelflife but not the unfermented Boza. The Boza described is not produced by starter culture and does not contain living bacteria at the end product, on the contrary to our invention.

The property that differentiates the bacterial composition of this invention from commercial starter cultures is that it is isolated from natural microflora of commercial Boza from the market, it does not contain yeast and has no unnatural genetic alteration. At cereal based products generally a yeast species (*Saccharomyces cerevisea*) belonging to Saccharomyces genera are used.

*Lactobacillus plantarum* GE223 and Wiessella confusa GE213 were isolated from Boza and being not subjected to any genetic manipulation, they were not used as Boza starter cultures before. Standard quality fresh Boza can be produced at any time of the year by inoculating this bacteria combination into sterilized unfermented Boza.

The property of this starter culture is that it covers a mixture of two lactic acid bacteria with different attributes. From these, *L. plantarum* GE213 is homofer-mentative that produces, sourness, acetoin and aroma compounds, where as *W*. *confusa* GE213 being heterofermentative, produces different organic acids and gives Boza a characteristic taste. Besides this the acid and gas production of selected cultures are slow. Boza obtained at the end of the process is defined as a beverage being easy to drink, having slightly sour fruity taste and viscose texture.

### Boza Preparation

Wheat, corn, millet or other cereals and their mixtures that will be used as raw material, are crushed in a mill. Broken cereals are boiled by stirring in water 4-5 times of cereal used until they completely get soft. The boiled mixture is spread on trays and cooled to approximately 30 °C degrees until it forms a thick paste. Paste is mixed with 1 to 3 times of added water depending on the composition of the mixture and types of cereals. The obtained liquid where no phase separation is observable is directly filtrated through a sieve having 0.2-0.5 mm pore size or they are previously filtered through a sieve with wider pores to separate big pulp particules and consequently transferred to sieves having more small size. The obtained homogeneous viscose liquid is unfermented Boza. Traditionally this liquid is fermented by mixing with sugar at ratio of 10-15 % in a vessel, where remainings of fermented Boza from old Boza production is present and when it reaches to pH 5-5.5, it is tasted, cooled and consumed.

In this invention to be able to use starter cultures, filtrated liquid Boza is pasteurized (65-85 °C for 10-30 minutes) or sterilized (121 °C for 5 minutes) after sugar addition. There after starter culture is added at ratio of half and half (0.5 +0.5 %) into the mixture as 1% of the total Boza volume so that it contains 10⁶ cfu/ml of bacteria mixture.

This bacteria combination, is obtained by cultivating two bacteria (GE223 and GE 213) separately on MRS agar medium in petri dishes and mixing them after separately adjusting their concentration in sterile physiological water and is added to unfermented Boza. Boza, is fermented at 25 °C-30 °C for maximum 16 hours until its pH has decreased to the value pH 4.5-5 and is ready for consumption when it reaches this sourness. Boza is stored at 4-5 °C after fermentation. Boza preserves its taste until pH 3.9 and it is found to be over sour by many consumers when it reaches to pH 3.8.

### The Properties Of Selected Microorganisms Used In Boza

*L. plantarum* GE223 and *W*. *confusa* GE213 coded cultures were identified by using Biomérieux® Mini-API 50 CH Kit. Tests made with these kits revealed that GE223 utilizes D-ribose, D-galactose, D-glucose, D-fructose, D-mannose, D-mannitol, methyl-αD-mannopyranoside, N-acetylglucosamine, amygladin, arbutine, esculin, salicine, D-cellobiose, D-maltose, D-melibiose, sucrose, D-trehalose, D-melezitose, D-raffinose, gentiobiose and does not utilize L-arabinose, D-lactose, D-turanose, D-arabitol and potassium gluconate and G223 strain is identified as *Lactobacillus plantarum1.*

Where as GE213 utilizes D-xylose, D-galactose, D-glucose, D-fructose, D-mannose, D-mannitol, N-acetylglucosamine, amygladin, arbutine, esculin, salicine, D-cellobiose, D-maltose, sucrose, gentiobiose and potassium gluconate and does not utilize L-arabinose, D-ribose, metyl-αD-glucopyranoside, D-lactose, D-melibiose and D-trehalose and G213 strain is identified as *Wiessella confusa.*

The acetoin and CO₂ production from glucose and dextran from sucrose production, survival at 60±1°C for 30 minutes and growth in 4% NaCl, 6.5% NaCl, at 5±1°C, 10±1°C, 15±1°C and 45±1°C, arginin hydrolysis, esculin hydrolysis, coagulum formation in 24 hours in litmus milk, carbohydrate utilization and short chain fatty acid production properties of these bacteria were investigated. From the isolated Boza cultures, GE223 (*Lb*. *plantarum*) produces acetoin but does not produce CO₂ from glucose and dextran from sucrose, grows at %4 and %6.5 NaCl concentrations, does not hydrolyse arginin whereas it hydrolyses esculine and does not grow at 5°C, 45°C but grows at 10°C, 15°C.

Where as GE213 (*W*. *confusa*) does not produce acetoin, produces CO₂ from glucose and dextran from sucrose, hydrolyses arginin and esculin. Further it grows at 10°C, 45°C, resists heat treatment at 60°C for 30 minutes and grows at 4% and 6.5% salt concentrations.

### Measuring Antibacterial Effect

The inhibition effect of selected bacteria on the growth inhibition of pathogens were determined by Bioscreen®C device. To proceed, selected bacteria, (*L. plantarum* and *W. confusa*) were cultivated on liquid MRS medium at 30±1°C for 72 hours and centrifuged at 3000 rpm for 10 minutes, the upper phase (supernatant), thought to have antimicrobial activity was taken and consequently microorganisms were removed by passing the supernatant through a 0.45µm sterile filter. The pH of the filtrate having the antimicrobial activity, was adjusted to pH 4.6±0.1 to avoid the low pH of the filtrate to inhibit the growth of pathogens. Pathogen bacteria *Bacillus cereus*, *Staphylococcus aureus* and *Escherichia coli* were activated by propagating at 37±1°C for 48 hours in brain heart infusion broth (BHI broth).

Wells of Bioscreen© system plate were loaded with 240 µl BHI broth, 30 µl pathogen culture diluted 10¹ times and 30 µl sterile filtrate that thought to have antimicrobial activity. In parallel, the mixture of antimicrobial and glucose free MRS added to BHI broth containing diluted cultures was loaded as the control. Pathogen bacteria growth was determined by measuring turbidometrically at 580 nm, every 15 minute after a brief shaking to compare with wells without antimicrobial solution (control). Subsequent to the experiment followed during 7 hours, the time spent for the growth of pathogen bacteria to increase the absorbance of the culture medium to a predetermined absorbance (for *E. coli* and *S*. *aureus:* 0.1 for *B. cereus:* 0.2 absorbance) was determined. In a prior work the increase of this time was found proportional to log decrease of bacteria. By the help of previously obtained calibration curves, the percentage in decrease of pathogen bacteria was calculated.

*L. plantarum* GE223 added *E. coli* culture reached the same absorbance at 320 minutes instead of 227, *S*. *aureus* in 255 minutes instead of 245, *B. cereus* culture in 401 minutes instead of 272. When these delay ratios were compared with previously established calibrations it was calculated that *L. plantarum* GE223 decreased *E. coli* counts by %88, *S*. *aureus* counts by %8 and *B. cereus* counts by %99.

I*t was calculated that W. confusa* GE213 added *E. coli* culture reached the same absorbance in 280 minutes instead of 228 and decreased the amount 71 % and had no antimicrobial effect against *S*. *aureus and B. cereus*.

Thus, it has been determined that when the bacteria subject to this invention are used together they have growth inhibition activity, especially against *E. coli* and *B. cereus*. In case of contamination to Boza, the bacteria used in this invention will protect Boza, due to their antimicrobial, pH lowering effect and also will challenge for competition of nutrients.

### Determination Of Shelf Life

Boza samples were prepared and began to be stored in refrigerator at 5 ± 1 °C to practice shelf life studies. For shelf life studies duplicate samples were taken from Boza at 1^{st}, 7^{th}, 14^{th}, 21^{st}, 28^{th}, 35^{th}, 42^{nd}, 60^{th} days and microbiological counts, pH, acidity, sensorial analysis, viscosity, organic acid composition and sugar distribution were followed.

As Boza is a viable bacteria containing starch based product, during its shelf life, starch is both degraded and recrystallized and its taste is continuously changing due to viable microorganisms. When Boza is stored cold to slow down its microbiological growth, its shelf life decreases as starch in Boza is altered to lead thickening and phase separation. It is not enough when souring of Boza is controlled by limiting bacterial growth, additionally starch degrading enzymes are needed to prevent thickening of starch and phase separation. Thus as previously described, prepared Boza was placed at +5° C into refrigerator and souring was prevented, whereas, thickening of texture was prevented by starch degrading ability of added bacteria. Boza's were observed for their, sensorial properties, pH and microbiological criteria during the shelf life. It was determined that, when Boza thickness was initially adjusted correctly, increase in Boza thickness or phase separation was not observed due to the ability of bacteria used in Boza production, to partially degrade starch and pH did not drop below the acceptable limit of pH 3.9. Acetic acid and ethanol content did not exceed the limits (according to TS 9778 Boza standard, volatile acidity should not be more than 0.2% and alcohol not more than 2%).

### Sensorial Analysis

In sensorial analysis made during shelf life, Boza appearance was defined as, clear, bright light yellow - cream colored, having no phase separation, no gas bubbles or cracks and having peculiar, homogeneous, thick liquid texture. The taste and odor of Boza was found, slightly sour, fruity, having a peculiar pleasant odor and like slightly sour tasting, sweet-sour dried fruit like inherent aroma.

### Properties Of Boza Fermenting Cultures

The biochemical properties of bacterial cultures mentioned in this invention are given in section entitled 'The properties of selected microorganisms used in Boza'.

The most important property of Boza making cultures is that these cultures are isolated from Boza and are not genetically modified.

Cultures mentioned in this invention conduces an aromatic Boza by simultaneously producing a rich variety of organic acids and acetoin that slightly burns the nasal cavity without exceeding the acetic acid and alcohol limits by fermenting the sugar of Boza in a short time. They increase safety and shelf life of Boza by showing antimicrobial effect against *E. coli* and *B. cereus* that can be contaminated to Boza from the environment and can be found in unfermented Boza.

The organic acids content giving taste to Boza produced with the bacteria mentioned in this invention were analyzed by high performance liquid chromatography (HPLC) and the lactic acid content stayed at 1.5-2g/l, acetic acid at 0.5-1g/l, propionic and butyric acid giving an undesirable taste at high concentrations, stayed only at trace concentrations during the 2 months of Boza shelf life.

*L. plantarum* GE223 found in Boza can degrade starch while *W*. *confusa*GE213 can not degrade starch and the tickening problem observed in Boza produced by classical method during storage in refrigerator, due to partial degradation of starch, is prevented.

When sugar composition of unfermented Boza is analyzed, at the beginning, it is determined that the sugar composition is 9.888 mg/L sucrose, 156 mg/L fructose, 68 mg/ L glucose decreased to 8780 mg/L sucrose, 371 mg/L fructose, 271 mg/L glucose after 2 months of Boza's shelf life and its sweetness was conserved.

The Boza forming cultures shows development at 15°C but no development below 11 °C. This enables Boza fermentation at cool ambient temperatures without heating and increasing shelf life by storing Boza in cold temperatures to stop fermentation.

Another property of this Boza with starter is that, probiotic properties can be given by addition of cultures (Yeast/bacteria) with proven probiotic properties.

*L. plantarum* GE223 and *W*. *confusa* GE213 bacteria described in this invention are deposited by the deposition number of LMG P-26178, in the BELGIAN COORDINATED COLLECTIONS OF MICROORGANISMS-BCCM/LMG COLLECTION (International Depositary Authority).

## Claims

1. Boza production process, **characterized in that** a mixture of *Lactobacillus plantarum* GE223 and *Wiessella confusa*GE213, deposited under the number LMG P-26178 at BELGIAN COORDINATED COLLECTIONS OF MICROORGANISMS-BCCM/LMG COLLECTION (International Depositary Authority) which is not genetically modified by an artificial way, is added into sterilized, sugar added, unfermented and filtrated Boza, prepared from mixture of cereals.

2. A process according to Claim 1 wherein, *Lactobacillus plantarum1* GE223 bacterium which is added into sterilized sugar added unfermented and filtrated Boza has the property of utilizing D-ribose, D-galactose, D-glucose, D-fructose, D-mannose, D-mannitol, methyl-αD-mannopyranoside, N-acetylglucosamine, amygladin, arbutine, esculin, salicine, D-cellobiose, D-maltose, D-melibiose, sucrose, D-trehalose, D-melezitose, D-raffinose, gentiobiose and not utilizing L-arabinose, D-lactose, D-turanose, D-arabitol and potassium gluconate.

3. A process according to Claim 1 wherein, *Wiessella confusa*GE213 bacterium which is added into sterilized sugar added unfermented and filtrated Boza has the property of utilizing D-xylose, D-galactose, D-glucose, D-fructose, D-mannose, D-mannitol, N-acetylglucosamine, amygladin, arbutine, esculin, salicine, D-cellobiose, D-maltose, sucrose, gentiobiose and potassium gluconate and not utilizing L-arabinose, D-ribose, metyl-αD-glucopyranoside, D-lactose, D-melibiose and D-trehalose.

4. A process according to Claim 1 wherein the bacteria mixture used is a Boza culture obtained by mixing these 2 bacteria in equal ratios, it does not contain yeast, but when necessary probiotic Boza can be produced by addition of yeast/bacteria with known probiotic properties.

5. A process according to Claim 1 where bacteria mixture used has cultures showing development at 15°C but no development below 11°C and thus enables Boza fermentation at cool ambient temperatures and stops fermentation (souring) at low temperature storage conditions to increase shelf life.

6. A process according to Claim 1 wherein *Lactobacillus plantarum1* GE223 bacterium which is added into sterilized sugar added unfermented and filtrated Boza produces, acetoin aroma compound, quinik, lactic, citric, malic, and low amounts of acetic acid, and *Wiessella confusa*GE213 does not produce acetoin aroma compound but produces, quinic, lactic, acetic, citric and malic acid.

7. A process according to Claim 1 wherein *Lactobacillus plantarum1* GE223 bacterium which is added into sterilized sugar added unfermented and filtrated Boza can degrade starch and *Wiessella confusa* GE213 can not degrade starch.

8. A process according to Claim 1 wherein the bacteria used in the pro-cesshave antimicrobial effect on pathogenic *Bacillus cereus* and *Escherichia coli* bacteria.

9. A process according to Claim 1 wherein the bacteria used in the process have the ability to keep pH of Boza above 3.9 for at least 90 days without use of any preservatives at 4-5°C, refrigeration conditions.

10. A process according to Claim 1 comprising the following steps;
a. Brix of Boza is standardized to a value between 10-50% before sterilization
b. Unfermented filtrated Boza is prior to fermentation, sterilized at (65-85 °C for 10-30 minutes) or sterilized at (121 °C for 5 minutes)
c. Boza is obtained by the addition of culture obtained by half to half volumetric mixture of *Lactobacillus plantarum* GE223 and *Wiessella confusa*GE213, so that it constitutes 1% of Boza and fermenting it at 25-30°C until its pH is 5-5.5 for maximum 16 hours
d. The obtained fermented Boza has at least a shelf life of 3 months when cooled at 4-5 °C and stored at these temperatures.

11. A process according to Claim 1 wherein the Boza produced by this method, when stored cold, its ethyl alcohol content does not exceed 2% and acetic acid does not exceed 0.2 %, the limits of Boza Standard (TS 9778).

12. A process according to Claim 1 wherein the Boza produced by this method, when stored below 11 °C, its pH will not drop below 3.9 ±0.1 before at least 90 days.

13. A process according to Claim 1 wherein the Boza produced by this method is that, when partially starch degrading cultures are used, Boza will not loss its fluidity, no phase separation will occur, and will not contain gas bubbles, during storage in refrigerator at 4-5 °C.

## Patentansprüche

1. Der Hetstellungsprozess des Boza, des Gemischs aus *Lactobacillus plantarum* GE223 und *Wiessella confusa* GE213, gesichert bei der Belgischen koordinierten Sammlung von Mikroorganismen (BCCM) / LMG - Sammlung (als internationale Hinterlegungsstelle) unter der Nr. LMG P-26178, hat keine künstliche, genetische Änderung durchlaufen. Er wird bei dem gefilterten, sterilisierten, unfermentierten Boza angewendet, das durch die Mischung von Getreiden zubereitet wird, wobei noch zusätzlicher Zucker hinzukommt.

2. Der 1. Behauptung zufolge macht sich das Bakterium *Lactobacillus plantarum* GE223, das im Laufe des Verfahrens dem sterilisierten, gefilterten, unfermentierten und Zucker beigegebenen Boza hinzugefügt wird, D-Ribose, D-Galaktose, D-Glucose, D-Fructose, D-Mannose, D-Mannitol, Methyl-αD-Mannopyranosid, N-Acetylglucosamin, Amygdalin, Arbutin, Aesculin, Salicin, D-Cellobiose, D-Maltose, D-Melibiose, Saccharose, D-Trahalose, D-Melezitose, D-Raffinose, Gentiobiose zu Nutze. L-Arabinose, D-Laktose, D-Turanose, D-Arabitol und Kaliumgluconat werden dagegen nicht nutzbar gemacht.

3. Der 1. Behauptung zufolge macht sich das Bakterium *Wiessella confusa* GE213, das im Laufe des Verfahrens dem sterilisierten, gefilterten, unfermentierten und Zucker beigegebenen Boza hinzugefügt wird, D-Xylose, D-Galaktose, D-Glucose, D-Fructose, D-Mannose, D-Mannitol, N-Acetylglucosamin, Amygdalin, Arbutin, Aesculin, Salicin, D-Cellobiose, D-Maltose, Saccharose, Gentiobiose und Kaliumgluconat nutzbar, während es keinen Nutzen aus L-Arabinose, D-Ribose, Methyl-αD-Glucopyranosid, D-Laktose, D-Melibiose, D-Trehalose zieht.

4. Der 1. Behauptung zufolge handelt es sich bei dem verwendeten Gemisch aus Bakterien um eine Boza - Kultur, die aus der Mixtur der beiden Bakterien gewonnen wird. Es ist unfermentiert, doch ggf. können Hefe/Bakterien mit bekannten probiotischen Eigenschaften hinzugefügt werden, wodurch die Herstellung von probiotischem Boza erfolgt.

5. Der 1. Behauptung zufolge handelt es sich bei den Bakterien in dem Gemisch um solche Kulturen, die sich bei 15°C entwickeln, aber unter 11°C keinerlei Entwicklung zeigen. Insofern muss die Fermentierung des Boza in einem kühlen Umfeld erfolgen und zwecks der Verlängerung der Haltbarkeit ist die Lagerung bei niedrigen Temperaturen zu bewerkstelligen, was die Fermentierung hemmt.

6. Der 1. Behauptung zufolge produziert das Bakterium *Lactobacillus plantarum* GE223, das dem sterilisierten, gefilterten, unfermentierten und Zucker beigegebenen Boza hinzugefügt wird, den Aromenbestandteil Acetoin, Chinasäure, Milchsäure, Zitronensäure, Äpfelsäure und in geringen Mengen Essigsäure. *Wiessella confusa* GE213 produziert zwar nicht den Aromenbestandteil Acetoin, aber Chinasäure, Milchsäure, Essigsäure, Zitronensäure und Äpfelsäure.

7. Der 1. Behauptung zufolge zersetzt das Bakterium *Lactobacillus plantarum* GE223, das dem sterilisierten, gefilterten, unfermentierten und Zucker beigegebenen Boza hinzugefügt wird, Stärke. *Wiessella confusa* GE213 zersetzt allerdings keine Stärke.

8. Der 1. Behauptung zufolge kommt den im Verfahren angewendeten Bakterien die Eigenschaft zu, eine antimikrobielle Einwirkung auf die pathogenen Bakterien *Bacillus cereus* und *Escherichia coli* auszuüben.

9. Der 1. Behauptung zufolge kommt den im Verfahren angewendeten Bakterien die Eigenschaft zu, den pH-Wert des Boza -ohne Verwendung irgendeines Konservierungsstoffes und bei einer Kühlung von 4-5°C- mindestens 90 Tage lang über 3.9 zu halten.

10. Der 1. Behauptung zufolge besteht die Prozedur aus den untenstehenden Phasen;
a. Der Grad Brix des Boza wird vor der Sterilisierung bei einem Wert zwischen 10-50% standardisiert.
b. Vor der Fermentierung wird das unfermentierte, gefilterte Boza 10-30 Minuten lang bei 65-85°C oder 5 Minuten lang bei 121°C sterilisiert.
c. Das Boza wird hergestellt, indem eine solche Kultur hinzugefügt wird, die durch die hälftige volumetrische Mischung der Bakterien *Lactobacillus plantarum* GE223 und *Wiessella confusa* GE213 zustande gebracht worden ist. Somit wird 1% des Boza hergestellt. Die Fermentierung dauert dann maximal 16 Stunden lang bei einer Wärme von 25-30°C an, bis der pH-Wert 5-5.5 erzielt worden ist.
d. Das hergestellte fermentierte Boza wird bei 4-5°C gekühlt und hat eine Haltbarkeit von mindestens 3 Monaten, wenn es bei diesen Temperaturen gelagert wird.

11. Der 1. Behauptung zufolge liegt bei der mit diesem Verfahren hergestellten und kühl gelagerten Boza der Anteil von Ethylalkohol nicht über 2% und der Anteil von Essigsäure liegt nicht über 0,2% (Boza - Standard TS 9778).

12. Der 1. Behauptung zufolge wird der pH-Wert mindestens 90 Tage lang nicht unter 3.9 ±0.1 sinken, solange das auf dieser Weise hergestellte Boza unter 11°C gelagert wird.

13. Der 1. Behauptung zufolge verliert das auf dieser Weise hergestellte Boza nicht an Fluidität und es kommt zu keiner Phasentrennung, sofern teilweise Stärke zersetzende Kulturen verwendet werden. Bei der Lagerung im Kühlschrank bei 4-5°C entstehen keine Glasbläschen.

## Revendications

1. Le processus de production de Boza, est **caractérisé en ce que** le mélange de *Lactobacillus plantarum* GE223 et le *Wiessella confusa* GE213, déposé sous le numéro LMG P-26178, aux COLLECTIONS des MICROORGANISMES-BCCM/LMG COORDONNES BELGES (Autorité de Dépôt International) qui n'est pas généralement modifié par une manière artificielle, ajouté dans le Boza stérilisé, sucré, non-fermenté et filtré, préparé par un mélange de céréales.

2. Un procédé selon la Revendication 1, dans lequel la bactérie *Lactobacillus plantarum1* GE223 qui est ajoutée dans le sucre stérilisé ajouté dans le Boza non fermenté et filtré a la propriété d'utiliser le D-ribose, le D-galactose, le D-glucose, le D-fructose, le D-mannose, le D-mannitol, le méthyl-αD-mannopyranoside, la N-acéetylglucosamine, l'amygladin, l'arbutine, l'esculine, la salicine, le D-cellobiose, le D-maltose, le D-melibiose, le saccharose, le D-tréhalose, le D-mélézitose, le D-raffinose, le gentiobiose et en n'utilisant pas le L-arabinose, le D-lactose, le D-turanose, le D-arabitol et le gluconate de potassium.

3. Un procédé selon la Revendication 1 dans lequel, la bactérie *Wiessella confusa* GE213 qui est ajoutée dans le sucre stérilisé ajouté dans le Boza non fermenté et filtré a la propriété d'utiliser le D-xylose, le D-galactose, le D-glucose, le D-fructose, le D-mannose, le D-mannitol, la N-acétylglucosamine, l'amygladin, l'arbutine, l'esculine, la salicine, le D-cellobiose, le D-maltose, le saccharose, le gentiobiose et le gluconate de potassium et en n'utilisant pas le L-arabinose, le D-ribose, le metyl-αD-glucopyranoside, le D-lactose, D-melibiose et le D-tréhalose.

4. Un procédé selon la Revendication 1 dans lequel le mélange de bactéries est une culture de Boza obtenue en mélangeant ces 2 bactéries dans des proportions égales, cela ne contient pas de levure mais lorsque cela est nécessaire le Boza probiotique peut être produit avec l'ajout de levure/de bactéries présentant des propriétés probiotiques connues.

5. Un procédé selon la Revendication 1 où le mélange de bactéries utilisées contient des cultures montrant un développement à 15°C mais qui ne montre pas de développement en dessous de 11°C permettant ainsi la fermentation du Boza à des températures ambiantes fraîches et arrêtant la fermentation (acidification) à des conditions de stockage de faible température pour augmenter la durée de conservation.

6. Un procédé selon la Revendication 1 dans lequel la bactérie *Lactobacillus plantarum1* GE223 qui est ajoutée dans le sucre stérilisé ajouté dans le Boza non fermenté et filtré produit du composé aromatique d'acétoïne, de l'acide quinique, lactique, citrique, malique et de faibles quantités d'acide acétique, et le *Wiessella confusa* GE213 ne produit pas du composé aromatique d'acétoïne mais produit de l'acide quinique, lactique, acétique, citrique et malique.

7. Un procédé selon la Revendication 1 dans lequel la bactérie *Lactobacillus plantarum1* GE223 qui est ajoutée dans le sucre stérilisé ajouté dans le Boza non fermenté et filtré puisse dégrader l'amidon et le *Wiessella confusa* GE213 ne peut pas dégrader l'amidon.

8. Un procédé selon la Revendication 1 dans lequel les bactéries utilisées dans le procédé ont un effet antimicrobien sur le pathogène *Bacillus cereus* et les bactéries *Escherichia coli.*

9. Un procédé selon la Revendication 1 dans lequel les bactéries utilisées dans le procédé ont la capacité de maintenir le pH du Boza au-dessus de 3.9 pendant au moins 90 jours sans l'utilisation d'aucuns conservateurs à des conditions de réfrigération de 4-5°C.

10. Un procédé selon la Revendication 1 comprenant les étapes suivantes;
a. Le Brix de Boza est normalisé à une valeur comprise entre 10-50% avant la stérilisation.
b. Le Boza non fermenté et filtré avant la fermentation, stérilisé à (65-85°C pour 10-30 minutes) ou stérilisé à (121°C pour 5 minutes).
c. Le Boza est obtenu par l'addition d'une culture obtenue à moitié-moité du mélange volumétrique de *Lactobacillus plantarum* GE223 et *Wiessella confusa* GE213, de sorte qu'elle constitue 1% de Boza, et le fermenter à 25-30°C jusqu'à ce que son pH soit de 5-5.5 pour un maximum de 16 heures.
d. Le Boza fermenté obtenu présente au moins une durée de conservatian de 3 mois lorsqu'il est refroidi à 4-5°C et stocké à ces températures.

11. Un procédé selon la Revendication 1 dans lequel le Boza produit par cette méthode, lors d'un stockage au froid, son teneur en alcool éthylique ne dépasse pas 2% et l'acide acétique ne dépasse pas 0,2%, limites de la Norme du Boza (TS 9778).

12. Un procédé selon la Revendication 1 dans lequel le Boza produit par cette méthode, lorsqu'il est stocké en dessous de 11°C, son pH ne tombera pas en dessous de 3.9±0.1 avant au moins 90 jours.

13. Un procédé selon la Revendication 1 dans lequel le Boza produit par cette méthode lorsque les cultures de dégradation partielle sont utilisées, le Boza ne perdra pas sa fluidité, aucune phase de séparation se produira et ne contiendra pas de bulles de gaz durant le stockage dans le réfrigérateur à at 4-5 °C.
